# EUROPÄISCHE PATENTANMELDUNG

(11) **EP 2 348 253 A1**
(43) Veröffentlichungstag der Anmeldung: **27.07.2011**
(21) Anmeldenummer: 10151473.5
(22) Anmeldetag: 22.01.2010
(51) Int. Cl.: F23J 15/06

(54) **Emissionsfreies Verfahren zur Verrichtung mechanischer Arbeit**

(71) Anmelder: RV Lizenz AG, 6300 Zug (CH)
(72) Erfinder: Rüdlinger, Mikael, 8404 Winterthur (CH)
(74) Vertreter: Rentsch Partner AG

(57) **Zusammenfassung**

Bei einem Verfahren zur Verrichtung mechanischer Arbeit und/oder zur Erzeugung elektrischer Energie, wird die zum Betrieb notwendige Energie aus der Oxidation von kohlenstoffhaltigen Betriebsstoffen (20) zu einem Produktgas (21) im wesentlichen bestehend aus Kohlendioxid (24) und Wasser (23) bezogen, wobei die bei der Oxidationsreaktion entstehenden Produktgase (21) verdichtet und/oder kondensiert und in einem Speicher (15) aufbewahrt werden.

## Beschreibung

### Technisches Gebiet

Die Erfindung betrifft emissionsfreie Verfahren zur Verrichtung mechanischer Arbeit und zur Erzeugung elektrischer Energie.

### Stand der Technik

Im Zuge der laufend zunehmenden Mobilität und der damit einher gehenden Umweltbelastung besteht seit längerem Bedarf an Antriebsvorrichtungen, insbesondere Verbrennungsmotoren, mit verringertem Ausstoss von Schadstoffen wie beispielsweise Stickoxiden, Kohlenmonoxid und flüchtigen organischen Verbindungen. Zu diesem Zweck wurden zum einen Anstrengungen unternommen, die Verbrennungsgase von Schadstoffen zu reinigen, beispielsweise mit Filtern und Katalysatoren, und zum anderen die Bildung dieser Schadstoffe zu reduzieren.

Bei Verwendung kohlenwasserstoffbasierter Treibstoffe wie beispielsweise Benzin, Diesel oder Erdgas ist Kohlendioxid ein unvermeidliches Endprodukt des Verbrennungsvorgangs. Schon länger ist nun bekannt, dass Kohlendioxid sehr negative Auswirkungen auf das Klimagleichgewicht der Erde hat und stark zur menschengemachten Klimaerwärmung beiträgt. Die Vermeidung von Kohlendioxidemissionen ist daher sehr wünschenswert.

Ein Herausfiltern von Kohlendioxid aus Verbrennungsabgasen ist in der Regel mit vernünftigem energetischem Aufwand nur schwer möglich. Für den grossindustriellen Massstab werden Systeme gestestet, in welchen das Kohlendioxid beispielsweise in amin-basierten Lösungsmitteln aufgefangen wird. Solche Systeme sind jedoch aufwendig und kompliziert, und für kleinere Anlagen nicht praktikabel. Zur Verringerung der Kohlendioxidemissionen werden weiter Verbrennungsmotoren mit geringerem Treibstoffverbrauch und damit auch geringerem Kohlendioxidausstoss entwickelt, oder es werden kohlendioxidneutrale biomassenbasierte Treibstoffe verwendet.

Elektrisch betriebene Fahrzeuge sind zumindest lokal absolut emissionsfrei, jedoch sind auch die heute zur Verfügung stehenden Akkumulatorsysteme immer noch sehr schwer, beziehungsweise die Energiedichte zu gering, was die erreichbare maximale Reichweite beschränkt. Zudem sind batteriebetrieben Fahrzeuge mit Bezug auf die Wiederaufladzeit bzw. Betankzeit weiterhin Fahrzeugen mit chemischen Treibstoffen unterlegen.

Alternativ wurden Verfahren zur Gewinnung von elektrischer Energie zum Betrieb elektrisch angetriebener Fahrzeuge Brennstoffzellensysteme entwickelt, in welchen aus kohlenwasserstoffbasierten Treibstoffen und Luftsauerstoff direkt elektrochemisch Strom erzeugt wird. Auch hier jedoch resultiert als Reaktionsprodukt Kohlendioxid.

Mit der Verwendung von Wasserstoff als Treibstoff für Verbrennungsmotoren oder Brennstoffzellen kann die Emission von Kohlendioxid vermieden werden. Wasserstoff weist jedoch eine geringere Energiedichte auf als kohlenstoffbasierte flüssige Treibstoffe, und stellt auch bei der Produktion und der Lagerung spezielle Probleme.

Für Verbrennungskraftmaschinen gibt es im Stand der Technik eine Vielzahl von seit Jahren etablierten Technologien. Anstatt völlig neue Technologien entwickeln zu müssen, wäre es aus Effizienzgründen wünschenswert, diese bestehenden Technologien so modifizieren zu können, dass ein der Ausstoss von Kohlendioxid reduziert oder vermieden wird.

### Aufgabe der Erfindung

Aufgabe der Erfindung ist es, ein Verfahren zur Verfügung zu stellen zur Verrichtung mechanischer Arbeit und zur Erzeugung elektrischer Energie, welches die oben erwähnten und andere Nachteile nicht aufweist. Insbesondere soll ein solches Verfahren stark reduzierte Emissionen oder gar keine Emissionen aufweisen.

Eine andere Aufgabe der Erfindung ist es, ein Verfahren zur Verfügung zu stellen, welche es erlaubt, anfallendes Kohlendioxid und andere Emissionen effizient aufzufangen und für eine weitere Verwendung, eine Endlagerung oder eine Wiederverwertung zu speichern.

Eine weitere Aufgabe der Erfindung ist es, ein Verfahren zur Verfügung zu stellen, welches mit einem geschlossenen Kreislauf betrieben werden kann.

Diese und weitere Aufgaben werden gelöst durch ein erfindungsgemässes Verfahren zur Verrichtung mechanischer Arbeit und zur Erzeugung elektrischer Energie, und ein erfindungsgemässen Verfahren zur Versorgung eines oder mehrerer Abnehmer, welche ein solches erfindungsgemässes Verfahren durchführen, gemäss den unabhängigen Ansprüchen. Weitere vorteilhafte Ausführungsformen sind in den abhängigen Ansprüchen gegeben.

### Darstellung der Erfindung

Bei einem erfindungsgemässen Verfahren zur Verrichtung mechanischer Arbeit und/oder zur Erzeugung elektrischer Energie wird die zum Betrieb notwendige Energie aus der Oxidation von kohlenstoffhaltigen Betriebsstoffen zu einem Produktgas im wesentlichen bestehend aus Kohlendioxid und Wasser bezogen. Die bei der Oxidationsreaktion entstehenden Produktgase werden verdichtet und/oder kondensiert und in einem Speicher aufgefangen. Vorteilhaft wird als Oxidationsmittel reiner Sauerstoff verwendet.

Bei einer Ausführungsvariante eines erfindungsgemässen Verfahrens werden die verdichteten Produktgase vor und/oder nach der Verdichtung und/oder Kondensation abgekühlt.

Bei einer anderen Variante eines erfindungsgemässen Verfahrens wird aus den Produktgasen Wasser auskondensiert und/oder abgeschieden.

Vorteilhaft wird ein erfindungsgemässes Verfahren mit einer Brennstoffzelle oder einer Wärmekraftmaschine durchgeführt.

Bei einer weiteren vorteilhaften Ausführungsvariante eines erfindungsgemässen Verfahrens werden die Betriebsstoffe mit einem Verfahren zur thermisch-chemischen Verwertung von kohlenstoffhaltigen Ausgangsstoffen hergestellt, bei welchem in einer ersten Stufe die kohlenstoffhaltigen Ausgangsstoffe pyrolysiert werden, wobei Pyrolysekoks und Pyrolysegas entstehen. In einer zweiten Stufe wird der Pyrolysekoks aus der ersten Stufe vergast, wobei Synthesegas entsteht, und Schlacke und andere Reststoffe übrig bleiben und abgeführt werden. In einer dritten Stufe wird das Synthesegas aus der zweiten Stufe in die Betriebstoffe umgewandelt wird; wobei überschüssiges Rücklaufgas aus der dritten Stufe in die erste Stufe und/oder die zweite Stufe geleitet wird Die drei Stufen bilden einen geschlossenen Kreislauf. In der europäischen Patentanmeldung Nr. 09176684.0 des Anmelders sind ein Verfahren und eine Anlage zur thermisch-chemischen Verarbeitung und Verwertung von kohlenstoffhaltigen Substanzen offenbart. Die Offenbarung dieser Anmeldung bildet einen integralen Bestandteil der Beschreibung der in der vorliegenden Anmeldung beanspruchten Erfindung. Bei noch einer weiteren vorteilhaften Variante eines erfindungsgemässen Verfahrens wird mindestens ein Teil der Produktgase in einem Verfahren zur thermisch-chemischen Verwertung von kohlenstoffhaltigen Ausgangsstoffen verwertet bei welchem in einer ersten Stufe die kohlenstoffhaltigen Ausgangsstoffe pyrolysiert werden, wobei Pyrolysekoks und Pyrolysegas entstehen. In einer zweiten Stufe wird der Pyrolysekoks aus der ersten Stufe vergast, wobei Synthesegas entsteht, und Schlacke und andere Reststoffe übrig bleiben und abgeführt werden. In einer dritten Stufe wird das Synthesegas aus der zweiten Stufe in die Betriebstoffe umgewandelt wird; wobei überschüssiges Rücklaufgas aus der dritten Stufe in die erste Stufe und/oder die zweite Stufe geleitet wird Die drei Stufen bilden einen geschlossenen Kreislauf. Die Produktgase werden in die erste Stufe und/oder die zweite Stufe und/oder die dritte Stufe eingespeist. Vorzugsweise werden die Produktgase in das Rücklaufgas eingespeist.

Bei einem erfindungsgemässen Verfahren zur Versorgung eines oder mehrerer Abnehmer, welche ein erfindungsgemässes Verfahren durchführen, mit gasförmigen und/oder flüssigen Betriebstoffen für dieses Verfahren, werden die Abnehmer mit einem ersten Versorgungsnetz mit gasförmigen und/oder flüssigen Betriebstoffen aus einer oder mehreren Produktionsanlagen und/oder aus einem oder mehreren ersten Speichern versorgt. Mit einem zweiten Rückführungsnetz werden mindestens ein Teil der beim Antriebsverfahren anfallenden Abgase, insbesondere Kohlendioxid, von den Abnehmern zu einer oder mehreren Produktionsanlagen und/oder zu einem oder mehreren zweiten Speichern zurückgeführt.

Bei einem erfindungsgemässen Verfahren zur Produktion von elektrischem Strom wird die Antriebsenergie für den Stromgenerator mit einem oben stehen diskutierten erfindungsgemässen Verfahren erzeugt.

Bei einer vorteilhaften Vorrichtung zur Verrichtung mechanischer Arbeit und/oder zur Erzeugung elektrischer Energie wird die zum Betrieb notwendige Energie aus der Oxidation von kohlenstoffhaltigen Betriebsstoffen zu einem Produktgas im wesentlichen bestehend aus Kohlendioxid und Wasser bezogen. Eine Vorrichtung zur Verdichtung und/oder Kondensation des Produktgases ist vorgesehen. Ein Speicher dient zur Aufnahme des verdichteten und/oder kondensierten Produktgases. Eine solche erfindungsgemässe Antriebsvorrichtung ist mit reinem Sauerstoff als Oxidationsmittel betreibbar. Vor und/oder nach der Vorrichtung zur Verdichtung und/oder Kondensation des Produktgases kann ein Wärmetauscher zur Abkühlung des Produktgasstromes vorgesehen sein. Eine andere Ausführungsform einer solchen Vorrichtung weist eine Vorrichtung zur Kondensation und/oder Abscheidung von Wasser aus dem Produktgas auf. Die genannten Vorrichtung können vorteilhaft verwendet werde, um ein erfindungsgemässes Verfahren durchzuführen.

Eine solche vorteilhafte Antriebsvorrichtung kann als Brennstoffzelle oder als Wärmekraftmaschine ausgestaltet sein, beispielsweise als Kolbenmotor oder Turbine. Eine als Wärmekraftmaschine ausgestaltete Vorrichtung ist vorteilhaft eine Verbrennungskraftmaschine, mit mindestens einer Brennkammer zur Verbrennung von flüssigem oder gasförmigem Betriebsstoff mit Sauerstoff, mit Mitteln zur Umsetzung des entstehenden Gasdrucks bzw. Gasvolumens in mechanische Arbeit, mit einer Zufuhrvorrichtung zum Einbringen von Sauerstoff in die Brennkammer, und mit einer Entlüftungsvorrichtung zur Entfernung der Verbrennungsgase aus der Brennkammer. Stromabwärts von der Entlüftungsvorrichtung sind ein Verdichter zur Verdichtung der Verbrennungsgase und/oder eine Kondensationsvorrichtung zur teilweisen Kondensation der Verbrennungsgase vorgesehen. Eine weitere Variante einer solchen erfindungsgemässen Antriebsvorrichtung weist eine Zufuhrvorrichtung zum Einbringen von Wasser in die Brennkammer und/oder in den Produktgasstrom nach dem Austritt aus der Brennkammer auf.

Eine vorteilhafte Betankungsanlage zur Betankung einer mobilen Maschine mit einer solchen Vorrichtung mit gasförmigen oder flüssigen Betriebstoffen weist Mittel zur Entnahme von verdichteten Gasen, insbesondere Kohlendioxid, aus einem Speicher der mobilen Maschine auf. Vorteilhaft weist eine solche Betankungsanlage auch Mittel auf zum Betanken der mobilen Maschine mit Sauerstoff.

### Kurze Beschreibung der Zeichnungen

Zum besseren Verständnis der vorliegenden Erfindung wird nachfolgend auf die Zeichnungen Bezug genommen. Diese zeigen lediglich Ausführungsbeispiele des Erfindungsgegenstands.
- Figur 1: zeigt schematisch eine Vorrichtung zur Durchführung des erfindungsgemässen Verfahren in Kombination mit einer Anlage zur thermisch-chemischen Verwertung von kohlenstoffhaltigen Substanzen, wobei sich ein im Wesentlichen geschlossener Stoffkreislauf ergibt.
- Figur 2: zeigt schematisch eine Variante zu dieser Vorrichtung.
- Figur 3: zeigt schematisch eine Ausführungsform einer als Verbrennungskraftmaschine ausgestalteten Vorrichtung.
- Figur 4: zeigt schematisch eine andere Ausführungsform einer als Verbrennungskraftmaschine ausgestalteten Vorrichtung.
- Figur 5: zeigt schematisch eine Vorrichtung in einem Fahrzeug, sowie eine mögliche Ausgestaltung eines geschlossenen Kreislaufs für die Treibstoffversorgung eines solchen Fahrzeugs mit einer Vorrichtung, in Verbindung mit einem Rückführungssystem für Kohlendioxid.

- Figur 6: zeigt schematisch eine mögliche Ausgestaltung eines Versorgungsnetzes für gasförmige Treibstoffe in Verbindung mit einem Rückführungssystem für Kohlendioxid, zur Durchführung des erfindungsgemässen Versorgungsverfahrens.

### Ausführung der Erfindung

Die im Folgenden gegebenen Beispiele sollen der besseren Veranschaulichung der vorliegenden erfindungsgemässen Verfahren dienen, sind jedoch nicht dazu geeignet, die Erfindung auf die hierin offenbarten Merkmale zu beschränken.

Wie bereits erläutert wird bei einem erfindungsgemässen Verfahren zur Verrichtung mechanischer Arbeit und/oder zur Erzeugung elektrischer Energie die zum Betrieb notwendige Energie aus der Oxidation von kohlenstoffhaltigen Betriebsstoffen zu einem Produktgas bezogen. Die bei der Oxidationsreaktion entstehenden Produktgase werden verdichtet und/oder kondensiert und in einem Speicher aufgefangen. Die Verwertung der chemischen Energie erfolgt thermisch-chemisch oder elektro-chemisch. Ein solches erfindungsgemässes Verfahren weist einen geschlossenen Kreislauf auf, das heisst, es entstehen Emissionen in die Atmosphäre.

Die bei der Leistung mechanischer Arbeit anfallenden Reststoffe wie insbesondere Kohlendioxid werden nachbehandelt, verdichtet und platzsparend gespeichert, beispielsweise in einem Drucktank. Das gespeicherte Gasgemisch enthält im Wesentlichen nur Kohlendioxid und gegebenenfalls noch Wasser. Das Kohlendioxid wird regelmässig in eine geeignete grössere Speichervorrichtung zur weiteren Verwertung umgelagert wird. Vorteilhaft erfolgt diese Rückführung des Kohlendioxids zeitgleich beispielsweise mit dem Betanken eines Fahrzeugs.

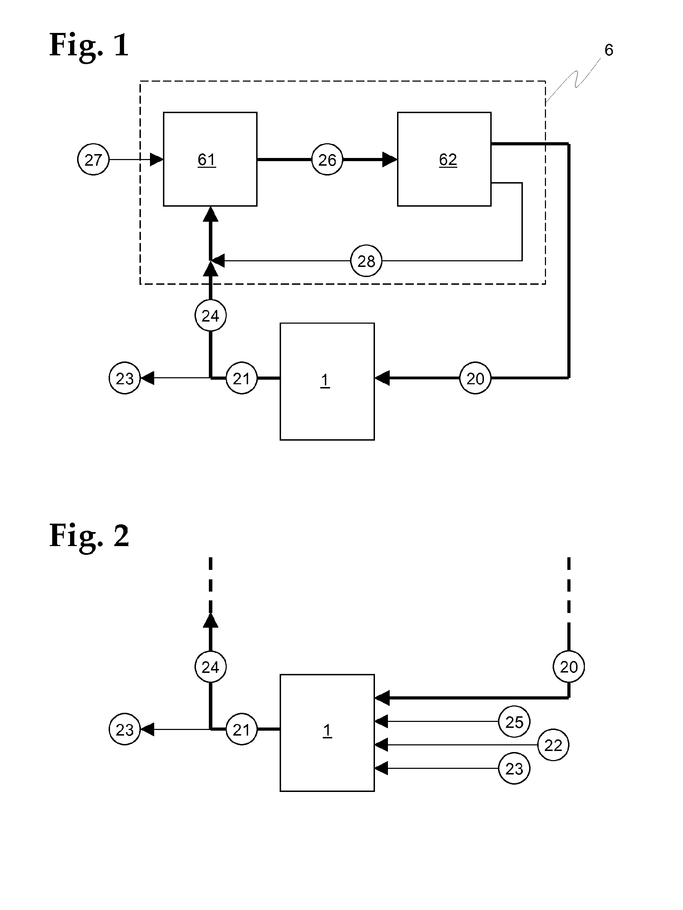

In einer vorteilhaften Variante eines erfindungsgemässen Verfahrens wird das gespeicherte Kohlendioxid teilweise oder vollständig wiederverwertet. In Figur 1 ist eine solche Ausführungsform schematisch dargestellt. In der europäischen Patentanmeldung Nr. 09176684.0 des Anmelders sind ein Verfahren und eine Anlage 6 zur thermisch-chemischen Verarbeitung und Verwertung von kohlenstoffhaltigen Substanzen offenbart. In Figur 1 ist die genannte Anlage 6 jedoch der Übersichtlichkeit halber stark vereinfacht dargestellt.

In einem im Wesentlichen geschlossenen Kreislauf 26, 28 wird in der Anlage 6 kohlenstoffhaltiges Ausgangsmaterial 27 in Kohlenwasserstoffe 20 und Kohlenwasserstoffderivate umgewandelt. Dazu wird einer ersten und zweiten Stufe 61 das kohlenstoffhaltige Ausgangsmaterial 27 in Synthesegasgemisch 26 umgewandelt, und in einer dritten Stufe 62 werden aus dem Synthesegasgemisch 26 Kohlenwasserstoffe und andere Wertsstoffe 20 erzeugt, die anderweitig verwendet werden können, beispielsweise als Treibstoffe bzw. Betriebsstoffe 20. Nach der Synthesestufe 62 verbleibendes Rücklaufgasgemisch 28 enthält im Wesentlichen Kohlendioxid, und wird als Vergasungsmittel wieder in die erste Stufe geleitet.

Eine Vorrichtung 1 zur Durchführung des erfindungsgemässen Verfahrens verwendet nun als Betriebstoff vorteilhaft gasförmige oder flüssige Kohlenwasserstoffe und Kohlenwasserstoffderivate 20 aus der Anlage 6. Die thermische oder elektrische Energie erzeugende Oxidationsreaktion erfolgt dabei mit reinem Sauerstoff 22 anstatt mit Luft. Der Sauerstoff wird vorteilhaft in einem Drucktank mitgeführt. Die Vorrichtung 1 kann beispielsweise eine Verbrennungskraftmaschine sein, in welcher die bei der Oxidationsreaktion anfallende Wärme in einer Wärmekraftmaschine in mechanische Arbeit umgewandelt wird, oder eine Brennstoffzelle in Kombination mit einem Elektromotor, in welcher die Oxidationsreaktion zur Stromerzeugung genutzt wird.

Die Verwendung von Sauerstoff 22 anstatt Luft vermeidet zum einen aufgrund der Abwesenheit des Luftstickstoffs bei einer thermisch-chemischen Reaktion bei hohen Temperaturen die Bildung von Stickoxiden, vor allem aber verbleiben in den anfallenden Reaktionsprodukte 21 im Wesentlichen nur Kohlendioxid 24 und Wasserdampf 23. Je nach Stöchiometrie der Reaktion können die anfallenden Gase auch gewisse Anteile an Kohlenmonoxid und unreagiertem Betriebsstoff enthalten. Diese können jedoch nachfolgend analog zum Kohlendioxid nachbehandelt werden.

Die Reaktionsprodukte 21 der Energie erzeugenden Reaktion sind im Wesentlichen gasförmig. Das entsprechende Gasgemisch wird nun verdichtet, um das Volumen zu reduzieren. Mit Hilfe eines Wärmetauschers wird vor und/oder nach der Verdichtung geleitet das Gasgemisch 21 abgekühlt, wodurch es entsprechend weiter an Volumen verliert. Wasser wird dabei auskondensiert, wodurch sich das Volumen des Gasgemisches nochmals weiter reduziert und im Gasgemisch nur Kohlendioxid 24 verbleibt, gegebenenfalls mit Anteilen an Kohlenmonoxid und unreagiertem Betriebsstoff. Das auskondensierte Wasser 23 wird abgetrennt. Das Kohlendioxid 24 kann in einem geeigneten Reservoir zwischengespeichert werden, beispielsweise einem Drucktank.

In regelmässigen Abständen wird das Kohlendioxid 24 nun wieder der ersten Stufe 61 der Anlage 6 zugeführt, so dass sich ein geschlossener Stoffkreislauf für das Kohlendioxid ergibt. So ist es möglich, dass mit dem oben genannten Verfahren aus kohlenstoffhaltigen Substanzen und Kohlendioxid flüssige oder gasförmige Kohlenwasserstoffe und Kohlenwasserstoffderivate erzeugt werden, und das so resultierende Treibstoffgemisch anschliessend in der Vorrichtung 1 in mechanische Arbeit umgesetzt wird. Das aufgefangene und gespeicherte Kohlendioxid wird rückgeführt und teilweise oder vollständig in der Anlage 6 wieder in Betriebstoff 20 umgesetzt. Auf diese Weise kann der effektive Kohlendioxidausstoss einer solchen Vorrichtung sehr stark vermindert oder gar ganz vermeiden werden.

Alternativ oder zusätzlich zur Rückführung kann ein Teil des gespeicherten Kohlendioxids auch in einer Art und Weise deponiert werden, dass es dauerhaft nicht in die Atmosphäre gelangen kann. Entsprechende Technologien zur dauerhaften langfristigen Lagerung von Kohlendioxid werden momentan weltweit weiterentwickelt. Getestet wird beispielsweise die Endlagerung von Kohlendioxid durch Einpumpen in leere Erdöl- und Erdgasfelder.

Eine weitere, generalisiert Variante einer Vorrichtung 1 zur Durchführung des erfindungsgemässen Verfahrens ist schematisch in Figur 2 dargestellt. Eine solche Verbrennungskraftmaschine 1 kann problemlos im Kombibetrieb mit Wasserstoff 25 als weiterem Betriebsstoff betrieben werden. In einem solchen Fall führt der Wasserstoffanteil zu einer Reduktion der anfallenden Restgasmenge nach dem Wärmetauscher und Verdichter, da bei der Oxidation von Wasserstoff mit Sauerstoff ohnehin nur Wasser anfällt.

Ist die Vorrichtung 1 als Verbrennungskraftmaschine ausgelegt, so kann in einer vorteilhaften Variante eines erfindungsgemässen Verfahrens Wasser 23 als zusätzliches Expansionsmittel verwendet werden. Zu diesem Zweck wird nach der Zündung des Verbrennungsvorgangs, beispielsweise nach der Selbstzündung des verdichteten Treibstoff-Luft-Gemischs in einem Dieselmotor, eine bestimmte Menge Wasser in den Zylinder eingespritzt. Dieses Wasser, das vorzugsweise fein zerstäubt ist, wird anschliessend durch die Wärmeenergie der exothermen Oxidationsreaktion verdampft. Der daraus resultierende Gasdruck- bzw. Gasvolumenzuwachs aufgrund des Wasserdampfs trägt so zur Erzeugung der kinetischen Energie bei, wobei jedoch gleichzeitig die Temperatur des Gesamtgemischs an Verbrennungsabgasen und Wasserdampf sinkt. Dies ist jedoch unproblematisch oder sogar wünschenswert, weil aufgrund der höheren Energiedichte einer Reaktion mit reinem Sauerstoff wesentlich höhere Reaktionstemperaturen entstehen, was die thermodynamische Effizienz verbessert, aber auch die Teile der Vorrichtung 1 stärker belasten kann.

Alternativ kann das Wasser auch als Dampf eingebracht werden. Ein gewisser Anteil an flüssigem Wasser kann zudem auch mit dem flüssigen Treibstoff vermischt zugeführt werden. Bei hohen Reaktionstemperaturen wirkt überhitzter Wasserdampf zudem als zusätzliches Oxidationsmittel neben dem Sauerstoff.

Nachfolgend wird eine Variante eines erfindungsgemässes Verfahrens am Beispiel einer Verbrennungskraftmaschine 1 in Form eines Kolbenmotors genauer beschrieben und erläutert. Analog können kann eine solche Verbrennungskraftmaschine jedoch auch als Turbinen oder Wankel-Motoren ausgestaltet sein. Die heissen Verbrennungsgase werden entsprechend dem Funktionsprinzip des jeweiligen Typs einer Verbrennungskraftmaschine für die Leistung mechanischer Arbeit verwendet, und dabei teilweise entspannt. Anschliessend verlässt das Gasgemisch die Brennkammer. So wird beispielsweise bei einer als Viertakt-Kolbenmotor ausgestalteten Verbrennungskraftmaschine beim dritten Takt das Verbrennungsgasgemisch aus dem Zylinder ausgestossen, und anschliessend verdichtet, abgekühlt und zwischengespeichert.

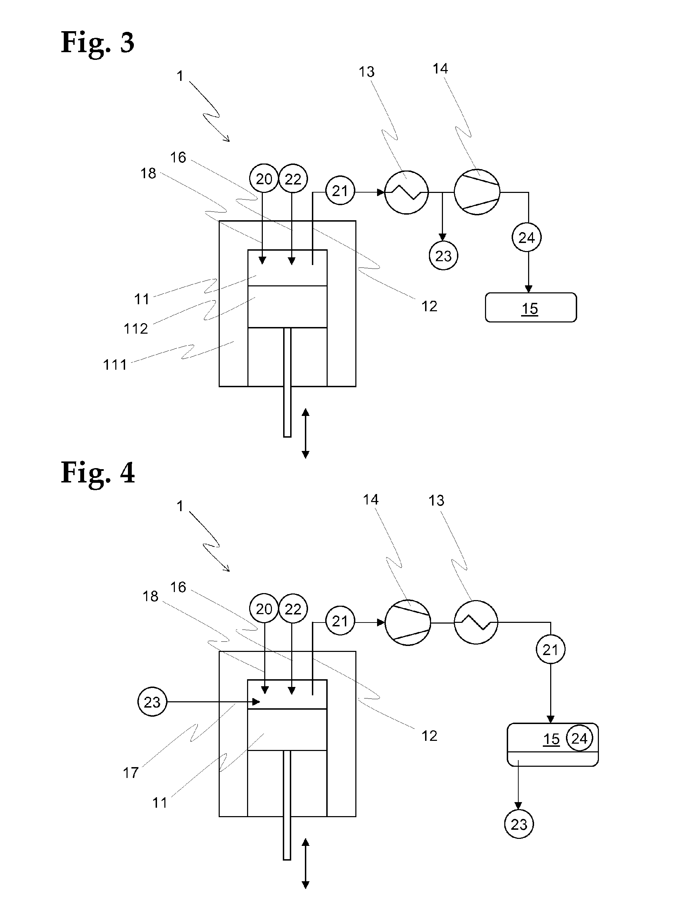

Eine mögliche Ausführungsform einer als Verbrennungskraftmaschine ausgestalteten Vorrichtung 1 zur Durchführung des erfindungsgemässen Verfahrens ist schematisch in Figur 3 dargestellt, am Beispiel eines Kolbenmotors mit einem Zylinder. Die dargestellte Verbrennungskraftmaschine 1 weist einen Zylinder 111 und einen darin beweglich angeordneten Kolben 112 auf, welche zusammen eine geschlossene Brennkammer 11 bilden. Mit einer lediglich schematisch dargestellten Zufuhrvorrichtung 16 wird in einem ersten Takt Sauerstoff 22 in die expandierende Brennkammer 11 eingebracht. Anschliessend wird in einem zweiten Takt der Sauerstoff 22 komprimiert, und am Ende des zweiten Takts mit einer Zufuhrvorrichtung 18 der Treibstoff 20 in die Brennkammer 11 eingebracht und verbrannt. Beim darauffolgenden dritten Takt verrichten die expandierenden Verbrennungsgase 21 mechanische Arbeit, und beim vierten Takt werden die teilweise entspannten Verbrennungsgase 21 durch eine nicht näher dargestellte Entlüftungsvorrichtung 12 aus der Brennkammer 11 abgeführt.

Die heissen Verbrennungsgase 21, die im Wesentlichen nur aus Kohlendioxid und Wasserdampf bestehen, werden anschliessend in einem nachgeschalteten Wärmetauscher 13 abgekühlt. Dadurch wird das Volumen dieser Produktgase 21 reduziert. Durch die Abkühlung kondensiert ein Teil des Wassers 23 aus, und wird abgetrennt. Das Restgas, das im wesentlichen nur noch aus Kohlendioxid 24 und gegebenenfalls Restanteilen Kohlenmonoxid und unreagierten Betriebsstoffen besteht, wird in einem in Serie angeordneten Verdichter 14 komprimiert, und in einen Speicher 15, im einfachsten Fall einen Druckbehälter, gepumpt. Die Kondensationsstufe 13 vor der Verdichtung 14 verringert die unerwünschte Bildung von Kondenswassertröpfchen im Verdichter 14.

Die dargestellte Verbrennungskraftmaschine 1 weist keine Emissionen auf. Da die Vorrichtung nicht mit Luft oder ähnlichen Gemischen betrieben wird, können auch keine luftspezifischen Schadstoffe wie beispielsweise Stickoxide entstehen. Das bei der Verbrennung entstehende Wasser ist unproblematisch, und kann abgetrennt werden. Das Kohlendioxid und andere Restgase werden im Speicher 15 aufgefangen und gespeichert zur weiteren Verwendung. Unverbrannte Anteile des Betriebsstoffes kondensieren entweder zusammen mit dem Wasser aus und werden abgetrennt, oder werden zusammen mit den Kohlendioxid verdichtet.

In den Betriebsstoffen können je nach Qualitätsgrad neben den Grundbausteinen C, H, O auch Schwefel und Phosphor vorhanden sein. Der Schwefel kann beispielsweise bei der bei der Oxidationsreaktion zu Schwefeldioxid und Schwefeltrioxid reagieren, was wiederum mit dem Wasser zu schwefliger Säure und Schwefelsäure reagiert. Diese korrosiven Schadstoffe können zusammen mit dem Wasser auskondensiert, abgetrennt und entsorgt werden. Das gleiche gilt für phosphorhaltige Schadstoffe und gegebenenfalls entstehende Feinstaubpartikel.

Eine weitere mögliche Ausführungsform Verbrennungskraftmaschine 1 zur Durchführung des erfindungsgemässen Verfahrens ist schematisch in Figur 4 dargestellt. In dieser Variante wird durch eine lediglich schematisch dargestellte Zufuhrvorrichtung 17 Wasser in die Brennkammer 11 eingebracht. Dies geschieht vorzugsweise so, dass während oder nach der Verbrennungsreaktion eine bestimmte Menge Wasser, flüssig oder dampfförmig, in die Brennkammer eingespritzt und fein verteilt wird. Dieses Wasser wird durch die Verbrennungswärme erhitzt, wodurch das gesamte Gasvolumen in der Brennkammer 11 steigt, und damit auch der für die Leistung der mechanischen Arbeit zur Verfügung stehende Gasdruck bzw. Gasvolumen. Entsprechend kann dann bei gleichbleibender Leistung die Menge an Treibstoff gesenkt werden.

Alternativ oder zusätzlich kann Wasser auch in den Produktgasstrom 21 eingebracht werden, wenn dieser die Brennkammer 11 verlassen hat. Eine solche Variante hat den Vorteil, dass die Verbrennungsreaktion in der Brennkammer bei möglichst hohen Temperaturen effizient verlaufen kann, und gleichzeitig die resultierende Temperatur des Produktgasstromes so niedrig ist, dass die nachfolgenden Einrichtungen 14, 13 nicht zu sehr belastet werden.

Die Menge an Wasser und der Zeitpunkt des Einspritzens werden so mit der Zufuhr von Betriebsstoff 21 und Sauerstoff 22 abgestimmt, dass die Verbrennungsreaktion effizient stattfinden kann. Vorteilhaft liegt die resultierende Temperatur während der Oxidationsreaktion im Wesentlichen so, dass ein möglichst hoher thermodynamischer Wirkungsgrad der Wärmekraftmaschine erreicht wird. Je grösser die Menge an verwendetem Wasser ist, desto geringer ist zudem der relative Anteil an Kohlendioxid in den Reaktionsgasen, was die nach der Auskondensation des Wassers verbleibende zu komprimierende Gasmenge reduziert.

In der in Figur 4 dargestellten Vorrichtung 1 werden die Verbrennungsgase 21 zuerst in einem Verdichter 14 komprimiert, bevor sie anschliessend im Wärmetauscher 13 abgekühlt werden. Das Wasser 23 verbleibt im Gasgemisch 21, und sammelt sich in flüssiger Form im Druckbehälter 15. Bei der regelmässigen Entleerung des Kohlendioxids 24 kann dann gleichzeitig auch das Wasser 23 abgelassen werden. Die in Figur 4 gezeigte Variante ist auch mit der Verbrennungskraftmaschine 1 ohne Wassereinspritzung aus Figur 3 kombinierbar, und umgekehrt, und kann allgemein für eine Vorrichtung 1 zur Durchführung des erfindungsgemässen Verfahrens verwendet werden.

Die für den Betrieb des Verdichters einer Vorrichtung 1 notwendige Energie wird vorteilhaft durch die Vorrichtung selber erzeugt. Als Folge davon sinkt der erreichbare Wirkungsgrad der Vorrichtung, jedoch wird damit gleichzeitig die Emissionsfreiheit des erfindungsgemässen Verfahrens erreicht. Zudem ist die erreichbare Leistung bei gleicher Motorendimensionierung grösser, was den Leistungsverlust wieder ausgleicht. Der Verdichter kann beispielsweise über ein geeignetes Getriebe direkt mit der Kurbelwelle einer Kolben-Verbrennungskraftmaschine betrieben werden. Ist die Vorrichtung 1 als Turbine ausgestaltet, so kann der Verdichter direkt auf der gleichen Welle sitzen. Die Produktgase können dann direkt anschliessend an den Expansionsvorgang kondensiert und der verbleibende Reststrom verdichtet werden.

In einer anderen Variante einer als Kolbenmotor ausgestalteten Vorrichtung zur Durchführung des erfindungsgemässen Verfahrens werden die Produktgase nach der Verbrennung beim dritten Takt innerhalb der Brennkammer bereits vorkomprimiert, und erst dann durch die Entlüftungsvorrichtung 12 abgelassen. Gegebenenfalls kann der nachgeschaltete Verdichter 14 auch weggelassen werden.

Eine solche Ausführungsform ist auch als Zweitakt-Variante möglich, weil die neue Beladung der Brennkammer mit Reaktionsgemisch (Treibstoff 20, Sauerstoff 22, Wasser 23) in der Vorrichtung 1 sehr schnell erfolgen kann. In einem zweiten Aufwärtstakt werden die Verbrennungsgase vorkomprimiert, und gegen Ende des Takts aus der Brennkammer abgelassen. Der gasförmige Sauerstoff kann unter hohem Druck am Ende des Aufwärtstakts in die Brennkammer eingeblasen werden, da für eine vollständige Verbrennungsreaktion vergleichsweise wenig Sauerstoff benötigt wird, und Wasser als zusätzliches Expansionsmittel vorhanden ist. Der flüssige Treibstoff 20 und das Wasser 23 als Expansionsmittel können ohnehin sehr schnell und unter hohem Druck in die Brennkammer eingespritzt werden.

Der Energieverbrauch für den Verdichter kann optimiert werden durch eine geeignete Kombination mit einem oder mehreren Wärmetauschern beziehungsweise Kühlelementen, in denen durch Abgabe von Wärmeenergie der Reaktionsgase an eine internes oder externe Wärmesenke das Gasvolumen reduziert werden kann.

Ebenfalls ist es möglich, eine Vorrichtung 1 zur Durchführung des erfindungsgemässen Verfahrens als Wärmekraftmaschine mit äusserer Verbrennung zu realisieren beispielsweise als Dampfmaschine bzw. Dampfturbine oder als Sterling-Motor.

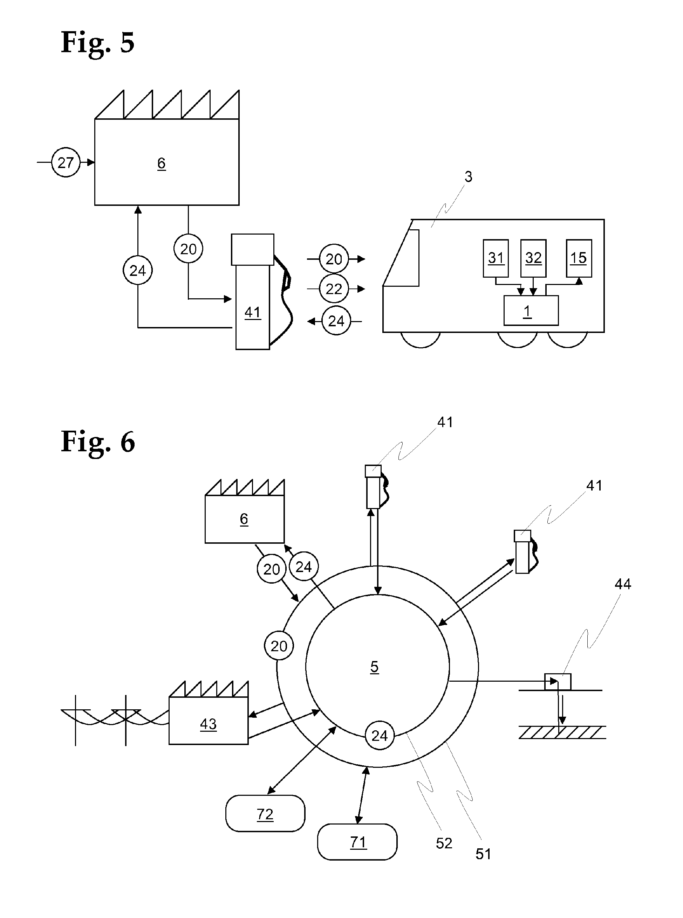

Ein Fahrzeug als Beispiel für eine mobile Maschine 3 angetrieben durch eine erfindungsgemässes Verfahren ist in Figur 5 schematisch dargestellt. Eine als Verbrennungskraftmaschine ausgestaltete Vorrichtung 1 zu Durchführung des Verfahrens wird entweder direkt als Antriebsaggregat eingesetzt, oder sie wird alternativ konstant bei einem idealen Drehzahlbereich betrieben, wobei mit einem Generator Strom für ein elektrisches Antriebsaggregat erzeugt wird. Ist die Vorrichtung 1 als Brennstoffzellensystem ausgestaltet, dient ebenfalls ein Elektromotor als Antriebsaggregat.

Das Fahrzeug 3 weist einen Tank 31 für den flüssigen oder gasförmigen Treibstoff 20 auf, sowie einen Drucktank 32 für den Sauerstoff 22. Der Gasspeicher 15 für das Kohlendioxid wird vorteilhaft ebenfalls als Drucktank 15 ausgestaltet. Ein erfindungsgemässes Verfahren ist besonders für weniger gewichtssensitive Fahrzeuge geeignet, wie beispielsweise Land-und Wasserfahrzeuge, insbesondere Fahrzeuge im Stadtverkehr oder Schiffe und grössere Boote. Je nach Grösse des Fahrzeugs ist es auch möglich, die Produktion von Sauerstoff vor Ort durchzuführen, wodurch der Drucktank 32 lediglich als Zwischenspeicher dient und entsprechend kleiner ausgelegt werden kann.

Nicht gezeigt in Figur 5 ist ein möglicher Vorratsbehälter für das Wasser 23. Ein solcher kann jedoch vergleichsweise klein ausgestaltet werden. Das bei der Nachbehandlung der Verbrennungsgase anfallende kondensierte Wasser kann wiederverwertet werden, wodurch der effektive Wasserverbrauch und damit die Grösse des notwendigen Vorratsbehälters noch kleiner wird.

Ebenfalls in Figur 5 dargestellt ist eine mögliche Ausgestaltung eines geschlossenen Kreislaufs für die Betriebstoffstoffversorgung eines Fahrzeugs 3 angetrieben durch ein erfindungsgemässes Verfahren. Das Fahrzeug 3 wird dazu an einer entsprechend eingerichteten Betankungsanlage 41 mit flüssigem oder gasförmigem Treibstoff 20 beladen, sowie mit komprimiertem Sauerstoff 22. Gleichzeitig wird das im Gasspeicher 15 aufgefangene Kohlendioxid 24 in einen entsprechenden Gasspeicher der Betankungsanlage 41 zurückgeführt.

Die Betankungsanlage 41 bildet mit einer Treibstoffproduktionsanlage 6, wie sie in der europäischen Anmeldung Nr. 09176684.0 des Anmelders offenbart ist, einen geschlossenen Kreislauf. Die Anlage 6 produziert aus kohlenstoffhaltigen Ausgangsmaterialien 27 flüssige oder gasförmige Kohlenwasserstoff-Treibstoffe 20. Diese werden mit geeigneten Mitteln zur Betankungsanlage 41 transportiert. Das Kohlendioxid 24 wiederum, gegebenenfalls mit Anteilen an Kohlenmonoxid und unreagiertem Treibstoff, das vom Fahrzeug 3 in die Betankungsanlage 41 zurückgeführt worden ist, wird über geeignete Mittel zur Anlage 6 transportiert, wo es in den geschlossenen Kreislauf der Anlage 6 eingespeist wird.

Besonders geeignet ist eine Betankungsanlage 41 beispielsweise für öffentliche Busbetriebe einer Stadt. In der Regel die Busse ausschliesslich in den Betankungsanlagen des Betriebs betankt, so dass mit einer vergleichsweise geringen Anzahl umzurüstenden Betankungsanlagen 41 viele Fahrzeuge 3 erreicht werden können. Dies führt zu tieferen Investitionskosten in eine entsprechende Gesamtanlage.

In räumlich klar definierten Gebieten, beispielsweise einer Stadt, können die Rückführung des Kohlendioxids und/oder die Versorgung mit Treibstoff auch über ein geeignetes Versorgungsnetz 5 erfolgen. Bei einem erfindungsgemässen Verfahren zur Versorgung eines oder mehrerer Abnehmer mit gasförmigen und/oder flüssigen Betriebstoffen für dieses Verfahren, werden die Abnehmer mit einem ersten Versorgungsnetz mit gasförmigen und/oder flüssigen Betriebstoffen aus einer oder mehreren Produktionsanlagen und/oder aus einem oder mehreren ersten Speichern versorgt. Mit einem zweiten Rückführungsnetz werden mindestens ein Teil der beim Antriebsverfahren anfalle-den Abgase, insbesondere Kohlendioxid, von den Abnehmern zu einer oder mehreren Produ-tionsanlagen und/oder zu einem oder mehreren zweiten Speichern zurückgeführt.

Figur 6 zeigt eine mögliche Ausgestaltung eines solchen Versorgungsnetzes zur Durchführung eines erfindungsgemässen Versorgungsverfahrens. Im gezeigten Beispiel verfügt das System über zwei ringförmige Netze. In ein erstes Versorgungsnetz 51 wird von einer Produktionsanlage 6 mit geschlossenem Kreislauf gasförmiger Treibstoff 20 eingespeist. Aus diesem Netz 51 beziehen verschiedene Betankungsanlagen 41 die gasförmigen Treibstoffe. Ebenfalls an das Netz 51 angeschlossen ist beispielhaft ein Stromkraftwerk 43, welches mit einem erfindungsgemässen Verfahren betrieben wird, sowie ein erster Zwischenspeicher 71.

Zusätzlich ist ein zweites Rückführungsnetz 52 vorhanden, in welches die Betankungsanlagen 41 und das Stromkraftwerk 43 das anfallende Kohlendioxid 24 einspeisen. Dieses wird wiederum in die Produktionsanlage 6 zurückgefördert. Ein zweiter Zwischenspeicher 72 dient der Erhöhung der Kapazität des zweiten Netzes. Zusätzlich ist in der gezeigten Variante auch beispielhaft ein Endlager 44 für Kohlendioxid gezeigt. Kohlendioxid wird aus dem zweiten Netz abgezweigt und unter Druck in ein ausgeschöpftes Erdöllager gepumpt wird, wo es dann dauerhaft verbleibt.

Wird eine Vorrichtung direkt an ein solches Versorgungssystem 5 angeschlossen, so kann auf einen Betriebsstofftank 31 und/oder Gasspeicher 15 für das Kohlendioxid ganz verzichtet werden, da das feste Leitungssystem diese Funktion übernimmt. Dies ist beispielsweise bei der Stromproduktionsanlage 43 in Figur 6 der Fall.

### Bezugszeichenliste

- 1: Vorrichtung zur Durchführung des erfindungsgemässen Verfahrens
- 11: Brennkammer
- 111: Zylinder
- 112: Kolben
- 12: Entlüftungsvorrichtung
- 13: Wärmetauscher
- 14: Vorrichtung zur Verdichtung, Verdichter
- 15: Gasspeicher
- 16: Zufuhrvorrichtung für Sauerstoff
- 17: Zufuhrvorrichtung für Wasser
- 18: Zufuhrvorrichtung für Treibstoff
- 20: Betriebsstoff, Treibstoff
- 21: Reaktionsprodukte, Produktgase, Verbrennungsgase, Abgase
- 22: Sauerstoff
- 23: Wasser
- 24: Kohlendioxid
- 25: Wasserstoff
- 26: Synthesegasgemisch
- 27: kohlenstoffhaltige Ausgangsstoffe
- 28: Rücklaufgase mit Kohlendioxid
- 3: Fahrzeug, mobile oder stationäre Maschine
- 31: Treibstofftank
- 32: Sauerstofftank
- 41: Betankungsanlage
- 43: Anlage zur Stromproduktion
- 44: Endlager für Kohlendioxid
- 5: Versorgungssystem
- 51: Versorgungsnetz Treibstoff
- 52: Rückführungsnetz Kohlendioxid
- 6: Anlage zur thermisch-chemischen Verwertung von kohlenstoffhaltigen Substanzen
- 61: Erste und zweite Stufe zur Erzeugung von Synthesegasgemisch
- 62: Dritte Stufe zur Erzeugung von Kohlenwasserstoffderivaten und anderen Wertsstoffen
- 71: Erster Speicher, Speicher für Betriebsstoffe
- 72: Zweiter Speicher, Speicher für Produktgase

## Patentansprüche

1. Verfahren zur Verrichtung mechanischer Arbeit und/oder zur Erzeugung elektrischer Energie, bei welchem die zum Betrieb notwendige Energie aus der Oxidation von kohlenstoffhaltigen Betriebsstoffen (20) zu einem Produktgas (21) im wesentlichen bestehend aus Kohlendioxid (24) und Wasser (23) bezogen wird, **dadurch gekennzeichnet, dass** die bei der Oxidationsreaktion entstehenden Produktgase (21) verdichtet und/oder kondensiert und in einem Speicher (15) aufgefangen werden.

2. Verfahren nach Anspruch 1, **dadurch gekennzeichnet, dass** als Oxidationsmittel reiner Sauerstoff (22) verwendet wird.

3. Verfahren nach Anspruch 1 oder 2, **dadurch gekennzeichnet, dass** die verdichteten Produktgase (21) vor und/oder nach der Verdichtung und/oder Kondensation abgekühlt werden.

4. Verfahren nach einem der vorangehenden Ansprüche, **dadurch gekennzeichnet, dass** aus den Produktgasen (21) Wasser auskondensiert und/oder abgeschieden wird.

5. Verfahren nach einem der vorangehenden Ansprüche, **dadurch gekennzeichnet, dass** das Verfahren mit einer Brennstoffzelle oder einer Wärmekraftmaschine durchgeführt wird.

6. Verfahren nach einem der vorangehenden Ansprüche, **dadurch gekennzeichnet, dass** die Betriebsstoffe (20) mit einem Verfahren zur thermisch-chemischen Verwertung von kohlenstoffhaltigen Ausgangsstoffen (27) hergestellt werden, bei welchem in einer ersten Stufe die kohlenstoffhaltigen Ausgangsstoffe (27) pyrolysiert werden, wobei Pyrolysekoks und Pyrolysegas entstehen; in einer zweiten Stufe der Pyrolysekoks aus der ersten Stufe vergast wird, wobei Synthesegas entsteht, und Schlacke und andere Reststoffe übrig bleiben und abgeführt werden; und in einer dritten Stufe das Synthesegas aus der zweiten Stufe in die Betriebstoffe (20) umgewandelt wird; wobei überschüssiges Rücklaufgas (28) aus der dritten Stufe in die erste Stufe und/oder die zweite Stufe geleitet wird, und die drei Stufen einen geschlossenen Kreislauf bilden.

7. Verfahren nach einem der vorangehenden Ansprüche, **dadurch gekennzeichnet, dass** ein mindestens ein Teil der Produktgase (21) in einem Verfahren zur thermisch-chemischen Verwertung von kohlenstoffhaltigen Ausgangsstoffen (27) verwertet werden, bei welchem in einer ersten Stufe die kohlenstoffhaltigen Ausgangsstoffe (27) pyrolysiert werden, wobei Pyrolysekoks und Pyrolysegas entstehen; in einer zweiten Stufe der Pyrolysekoks aus der ersten Stufe vergast wird, wobei Synthesegas entsteht, und Schlacke und andere Reststoffe übrig bleiben und abgeführt werden; und in einer dritten Stufe das Synthesegas aus der zweiten Stufe in die Betriebstoffe (20) umgewandelt wird; wobei überschüssiges Rücklaufgas (28) aus der dritten Stufe in die erste Stufe und/oder die zweite Stufe geleitet wird, und die drei Stufen einen geschlossenen Kreislauf bilden; und wobei die Produktgase in die erste Stufe und/oder die zweite Stufe und/oder die dritte Stufe eingespeist werden.

8. Verfahren nach Anspruch 7, **dadurch gekennzeichnet, dass** die Produktgase (21) in das Rücklaufgas (28) eingespeist werden.

9. Verfahren zur Versorgung eines oder mehrerer Abnehmer (41, 43, 3), welche ein Antriebsverfahren nach einem der vorangehenden Ansprüche durchführen, mit gasförmigen und/oder flüssigen Betriebstoffen (20) für dieses Antriebsverfahren, **dadurch gekennzeichnet, dass** die Abnehmer (41, 43, 3) mit einem ersten Versorgungsnetz (51) mit gasförmigen und/oder flüssigen Betriebstoffen (20) aus einer oder mehreren Produktionsanlagen (6) und/oder aus einem oder mehreren ersten Speichern (71) versorgt werden, und dass mit einem zweiten Rückführungsnetz (52) mindestens ein Teil der beim Antriebsverfahren anfallenden Abgase (21), insbesondere Kohlendioxid (24), von den Abnehmern (41, 43, 3) zu einer oder mehreren Produktionsanlagen (6) zurückgeführt und/oder zu einem oder mehreren zweiten Speichern (72) zurückgeführt werden.

10. Verfahren zur Produktion von elektrischem Strom, **dadurch gekennzeichnet, dass** die Antriebsenergie für einen Stromgenerator mit einem Verfahren nach einem der Ansprüche 1 bis 9 erzeugt wird.
